# EUROPÄISCHE PATENTANMELDUNG

(11) **EP 2 778 646 A1**
(43) Veröffentlichungstag der Anmeldung: **17.09.2014**
(21) Anmeldenummer: 14400019.7
(22) Anmeldetag: 11.03.2014
(51) Int. Cl.: G01M 5/00

(54) **Schneelastsensor und Einrichtung zur Ermittlung der auf tragende Teile wirkenden Schneelast**

(30) Priorität: 12.03.2013 DE 102013004552
(71) Anmelder: Hochschule Mittweida (FH), 09648 Mittweida (DE)
(72) Erfinder: Döring, Heinz, 09648 Mittweida (DE); Hartig, Ralf, 09648 Mittweida (DE)
(74) Vertreter: Krause, Wolfgang

(57) **Zusammenfassung**

Die Erfindung betrifft Schneelastsensoren für tragende Teile und Einrichtungen zur Ermittlung der auf tragende Teile wirkenden Schneelast mit wenigstens einem Schneelastsensor.

Die Schneelastsensoren und die Einrichtungen zeichnen sich insbesondere dadurch aus, dass die Schneelast jeweils einfach erfassbar und damit die tragenden Teile überwachbar sind.

Dazu ist an dem tragenden Teil ein Lichtwellenleiter als Schneelastsensor so angeordnet, dass die durch die Schneelast hervorgerufene Verformung des Teils und die damit verbundene Längenänderung des Lichtwellenleiters ein Maß für die Schneelast ist.

Für eine Einrichtung ist dazu der Lichtwellenleiter zur Ermittlung der Schneelast optisch mit einer Messeinrichtung verbunden oder lösbar verbunden.

## Beschreibung

Die Erfindung betrifft Schneelastsensoren für tragende Teile und Einrichtungen zur Ermittlung der auf tragende Teile wirkenden Schneelast mit wenigstens einem Schneelastsensor.

Einrichtungen zur Erfassung der Schneelast sind bekannt.

So ist durch die Druckschrift AT 9 464 U1 ein Verfahren zur Überwachung der Schneelasten auf Dächern bekannt. Dabei werden optische Übertragungsstrecken verwendet, die auf die Durchbiegung der tragenden Elemente der Dachkonstruktion agieren und bei Über- oder Unterschreitung vorgegebener Grenzwerte eine Alarmierung auslösen. Dazu sind ein Lichtsender und ein Lichtempfänger beabstandet zueinander angeordnet, die eine Lichtschranke bilden.

Die Druckschrift DE 20 2006 001 874 U1 beinhaltet ein System zur selbsttätigen Frühwarnung vor dem Abfall der Tragfähigkeitsreserven von Hallenbindern. Grundlage bildet eine Hilfslinie, die durch einen gespannten Draht oder Seil oder durch einen gebündelten Lichtstrahl gebildet ist.

Durch die Druckschrift DE 10 2006 027 322 A1 ist ein Verfahren und eine Vorrichtung zur Überwachung von tragenden Balken aus Holz, Stahl oder Beton an Bauwerken bekannt. Unter anderem besteht die Vorrichtung aus einem Lichtsender und einem Lichtempfänger, zwischen denen eine Blende angeordnet sein kann.

Abweichungen der Durchbiegelinie werden bei diesen Lösungen mit mechanischen Komponenten in Verbindung beabstandet zueinander angeordneten Lichtsender und Lichtempfänger und der Unterbrechung oder Beeinflussung des freien Lichtstrahls zwischen Lichtsender und Lichtempfänger realisiert. Fehlalarmierungen sind dabei nicht auszuschließen, zumal beispielsweise Partikel oder Lebewesen den Lichtstrahl ebenfalls beeinflussen können.

Der in den Patentansprüchen 1, 6 und 8 angegebenen Erfindung liegt die Aufgabe zugrunde, die auf tragende Teile wirkende Schneelast einfach zu erfassen und damit tragende Teile einfach zu überwachen.

Diese Aufgabe wird mit den in den Patentansprüchen 1, 6 und 8 aufgeführten Merkmalen gelöst.

Die Schneelastsensoren für tragende Teile und die Einrichtungen zur Ermittlung der auf tragende Teile wirkenden Schneelast mit wenigstens einem Schneelastsensor zeichnen sich insbesondere dadurch aus, dass die Schneelast jeweils einfach erfassbar und damit die tragenden Teile überwachbar sind.

Dazu ist an dem tragenden Teil ein Lichtwellenleiter als Schneelastsensor so angeordnet, dass die durch die Schneelast hervorgerufene Verformung des Teils und die damit verbundene Längenänderung des Lichtwellenleiters ein Maß für die Schneelast ist.

Für eine Einrichtung ist dazu der Lichtwellenleiter zur Ermittlung der Schneelast optisch mit einer Messeinrichtung verbunden oder lösbar verbunden. Die Messeinrichtung weist einen Lichtsender und einen Lichtempfänger zur Kopplung an den Lichtwellenleiter auf. Der Lichtsender und der Lichtempfänger sind mit einer Steuereinrichtung verbunden, wobei die Steuereinrichtung eine die Laufzeit der Lichtwellen im Lichtwellenleiter bestimmende und mit wenigstens einem gespeicherten und die Laufzeit des nicht verlängerten Lichtwellenleiters vergleichende und daraus die durch die Schneelast hervorgerufene Verformung des tragenden Teils ermittelnde Steuereinrichtung ist.

Für eine weitere Einrichtung zur Ermittlung der auf tragende Teile wirkenden Schneelast mit wenigstens einem Schneelastsensor ist dazu der Lichtwellenleiter zur Ermittlung der Schneelast optisch mit einer Messeinrichtung verbunden oder lösbar verbunden. Die Messeinrichtung besteht dabei aus einem über einen Generator mit einer Steuereinrichtung verbundenen Lichtsender zur Einkopplung wenigstens eines optischen Signals in den Lichtwellenleiter und einem über einen Phasendiskriminator mit der Steuereinrichtung verbundenen Lichtempfänger für das wenigstens eine Signal am Ausgang des Lichtwellenleiters. Weiterhin ist in der Messeinrichtung der Lichtempfänger mit einem ersten Eingang des Phasendiskriminators und der Ausgang des Generators mit einem zweiten Eingang des Phasendiskriminators verbunden, so dass die Steuereinrichtung entweder eine die Länge des Lichtwellenleiters aus dem Vergleich der Ausgangssignale des Generators und des Lichtempfängers im Phasendiskriminator oder eine die Länge des Lichtwellenleiters der Frequenz des Generators zuordnende Steuereinrichtung ist.

Lichtwellenleiter als dielektrische Wellenleiter bestehen bekannterweise aus Lichtleitern, die Fasern aus Quarzglas oder Kunststoff sein können.

Mit Hilfe der Schneelastsensoren und der Einrichtungen mit wenigstens einem derartigen Schneelastsensor dienen vorteilhafterweise der Überwachung von Gebäuden oder technischen Einrichtungen mit dem Ziel, eine Gefährdungssituation rechtzeitig zu erkennen. Tragende Teile sind dabei insbesondere Stahlträger, Fachwerkbalken oder Dachbalken beispielsweise einer Binderkonstruktion.

Vorteilhafterweise wird mittels des Schneelastsensors nicht die Schneelast sondern die Auswirkungen auf die betreffenden Teile der Konstruktion gemessen. Der Schneelastsensor erfasst dabei die Verformung der Teile der Konstruktion unabhängig von der Position und der Verteilung der Last. Jederzeit ist eine nachträgliche Installation des Schneelastsensors ohne Eingriff in die Bausubstanz möglich. Der Lichtwellenleiter kann dazu mittels wenigstens einer stoff-, form- und/oder kraftschlüssigen Verbindung auf oder an dem tragenden Teil befestigt werden. Die Arbeitsweise ist weitestgehend unabhängig von Umgebungseinflüssen wie beispielsweise Staub und Licht.

Damit wird ein an einem tragenden Teil angeordneter Lichtwellenleiter als Schneelastsensor für den tragenden Teil verwendet, wobei die durch die Schneelast hervorgerufene Verformung des Teils und die damit verbundene Längenänderung des Lichtwellenleiters ein Maß für die Schneelast ist.

Vorteilhafte Ausgestaltungen der Erfindung sind in den Patentansprüchen 2 bis 5, 7, 9 und 10 angegeben.

Nach der Weiterbildung des Patentanspruchs 2 ist der Lichtwellenleiter als wenigstens eine Schlaufe oder der Lichtwellenleiter in Form eines Mäanders oder der Lichtwellenleiter in lang gestreckter Form mit wenigstens einem Reflektor jeweils an dem tragenden Teil angeordnet.

Der Reflektor ist nach der Weiterbildung des Patentanspruchs 3 ein Endreflektor günstigerweise in Form eines Spiegels oder eines optischen Reflexionsfilters. Vorteilhafterweise kann das optische Reflexionsfilter ein Faser-Bragg-Gitter sein.

Der in lang gestreckter Form angeordnete Lichtwellenleiter weist nach der Weiterbildung des Patentanspruchs 4 mindestens einen Zwischenreflektor auf. Dieser kann günstigerweise als ein optisch bandbegrenztes Reflexionsfilter ausgebildet sein, welches beispielsweise ein Schmalband-Faser-Bragg-Gitter oder Breitband-Faser-Bragg-Gitter sein kann.

Der Lichtwellenleiter ist nach der Weiterbildung des Patentanspruchs 5 wenigstens bereichsweise mit einer Klebverbindung mit dem tragenden Teil verbunden. Die Klebverbindung ist eine stoffschlüssige Verbindung. Der Lichtwellenleiter kann dabei auf dem tragenden Teil oder in einer Vertiefung des tragenden Teils angeordnet sein.

Die Steuereinrichtung ist nach der Weiterbildung des Patentanspruchs 7 eine aus der Laufzeit der Lichtwellen im Lichtwellenleiter die Länge des Lichtwellenleiters bestimmende Steuereinrichtung ist.

Nach der Weiterbildung des Patentanspruchs 9 kann die Steuereinrichtung eine die Längenänderung des Lichtwellenleiters aus Vergleichen der Ausgangssignale des Generators und des Lichtempfängers im Phasendiskriminator ermittelnde Steuereinrichtung sein. Die Steuereinrichtung kann aber auch eine die Längenänderung des Lichtwellenleiters aus einer Frequenzänderung des Generators zum Erreichen einer zeitlich früheren Phasendifferenz zwischen den Signalen am Ausgang des Generators und des Lichtempfängers ermittelnde Steuereinrichtung sein.

Die Messeinrichtung ist nach der Weiterbildung des Patentanspruchs 10 mit einem an dem Teil angebrachten Temperatursensor verbunden oder verbindbar, so dass die Temperaturabhängigkeit des Lichtwellenleiters und dem Teil mittels der Steuereinrichtung kompensierbar ist. Die Kompensation erstreckt sich damit auf den Einfluss der Temperatur auf den Lichtwellenleiter und den Teil als Dach- und Trägerkonstruktion. Dazu kann der Temperatursensor vorteilhafterweise ein Messkörper oder ein integraler Temperatursensor in Form einer Schlaufe eines elektrisch leitenden Materials sein.

Ein Ausführungsbeispiel der Erfindung ist in den Zeichnungen jeweils prinzipiell dargestellt und wird im Folgenden näher beschrieben.

Es zeigen:
- Fig. 1: eine Einrichtung zur Ermittlung der auf tragende Teile wirkenden Schneelast mit einem in Schleife angeordneten Schneelastsensor,
- Fig. 2: eine Einrichtung zur Ermittlung der auf tragende Teile wirkenden Schneelast mit einem geradlinig angeordneten Schneelastsensor,
- Fig. 3: eine Einrichtung mit einer aus Laufzeiten die Länge bestimmenden Messeinrichtung und
- Fig. 4: eine Einrichtung mit einer aus Phasenverschiebungen von Signalen die Länge bestimmenden Messeinrichtung.

Ein Schneelastsensor für tragende Teile 1 besteht im Wesentlichen aus einem Lichtwellenleiter 2, 5. Eine Einrichtung zur Ermittlung der auf tragende Teile wirkenden Schneelast weist im Wesentlichen den Schneelastsensor 2, 5, eine Messeinrichtung 4 mit einer Steuereinrichtung auf.

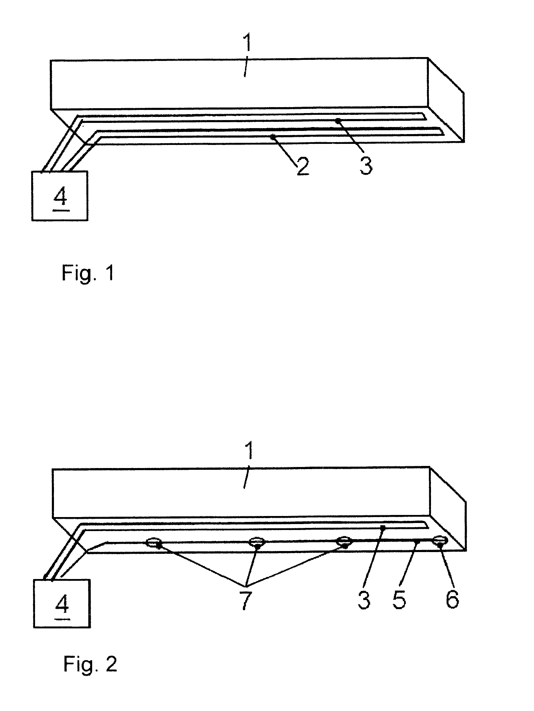

Die Fig. 1 zeigt eine Einrichtung zur Ermittlung der auf tragende Teile 1 wirkenden Schneelast mit einem in Schleife angeordneten Schneelastsensor 2 in einer prinzipiellen Darstellung.

An dem tragenden Teil 1 oder mehreren tragenden Teilen 1 ist an der Unterseite oder seitlich beispielsweise eines Dachträgers 1 der Lichtwellenleiter 2, 5 stoffschlüssig mit dem Teil 1 verbunden. Dazu ist der Lichtwellenleiter 2, 5 mit einer Klebverbindung mit dem Teil 1 verbunden. Die durch die Last hervorgerufene Verformung des Teils 1 führt zu einer der Last abhängigen Längenänderung des Lichtwellenleiters 2, 5, die damit ein Maß für die Schneelast ist.

In einer ersten Ausführungsform ist der Lichtwellenleiter 2 als Schlaufe (Darstellung in der Fig. 1) an dem tragenden Teil 1 angeordnet.

In einer zweiten Ausführungsform ist der Lichtwellenleiter 5 geradlinig und damit in gestreckter Form an dem tragenden Teil 1 angeordnet.

Die Fig. 2 zeigt eine Einrichtung zur Ermittlung der auf tragende Teile 1 wirkenden Schneelast mit einem geradlinig angeordneten Schneelastsensor 5.

In dieser zweiten Ausführungsform besitzt der Lichtwellenleiter 5 einen Endreflektor 6. Dieser Endreflektor 6 kann dabei ein Spiegel 6 oder ein optisches Reflexionsfilter 6 beispielsweise ein Faser-Bragg-Gitter 6 sein.

Zusätzlich kann der der Lichtwellenleiter 5 weitere Zwischenreflektoren 7 aufweisen. Die Zwischenreflektoren 7 sind optische bandbegrenzte Reflexionsfilter 7 beispielsweise in Form von Faser-Bragg-Gitter 7.

Bei der Einrichtung zur Ermittlung der auf tragende Teile wirkenden Schneelast mit wenigstens einem Schneelastsensor der ersten oder der zweiten Ausführungsform ist der Lichtwellenleiter 2, 5 zur Ermittlung der Schneelast optisch mit der Messeinrichtung 4 verbunden oder lösbar verbunden.

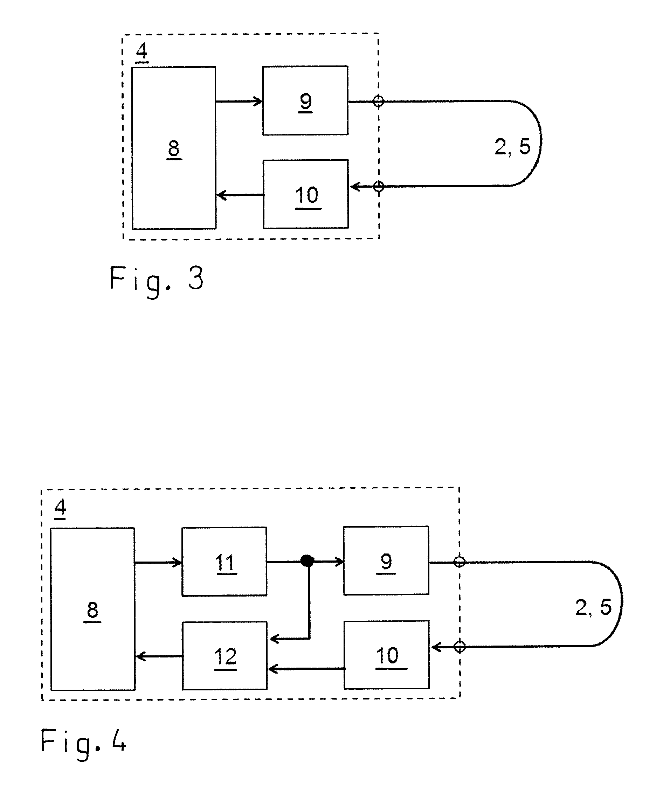

Die Fig. 3 zeigt eine Einrichtung mit einer aus Laufzeiten die Länge bestimmenden Messeinrichtung 4 in einer prinzipiellen Darstellung.

Die Messeinrichtung 4 der Einrichtung zur Ermittlung der auf tragende Teile wirkenden Schneelast mit wenigstens einem Schneelastsensor besitzt in einer ersten Ausführungsform einen Lichtsender 9 und einen Lichtempfänger 10 zur Kopplung an den Lichtwellenleiter 2, 5, die weiterhin mit der Steuereinrichtung 8 verbunden sind. Diese ist eine die Laufzeit der Lichtwellen im Lichtwellenleiter 2, 5 bestimmende und mit wenigstens einem gespeicherten und die Laufzeit des nicht verlängerten Lichtwellenleiters 2, 5 vergleichende und daraus die durch die Schneelast hervorgerufene Verformung des tragenden Teils 1 ermittelnde Steuereinrichtung 8.

Die Fig. 4 zeigt eine Einrichtung mit einer aus Phasenverschiebungen von Signalen die Länge bestimmenden Messeinrichtung 4 in einer prinzipiellen Darstellung.

Die Messeinrichtung 4 der Einrichtung zur Ermittlung der auf tragende Teile wirkenden Schneelast mit wenigstens einem Schneelastsensor besteht in einer zweiten Ausführungsform aus einem über einen Generator 11 mit einer Steuereinrichtung 8 verbundenen Lichtsender 9 zur Einkopplung wenigstens eines optischen Signals in den Lichtwellenleiter 2, 5 und einem über einen Phasendiskriminator 12 mit der Steuereinrichtung 8 verbundenen Lichtempfänger 10 für das wenigstens eine Signal am Ausgang des Lichtwellenleiters 2, 5.

Weiterhin ist der Lichtempfänger 10 mit einem ersten Eingang des Phasendiskriminators 12 und der Ausgang des Generators 11 mit einem zweiten Eingang des Phasendiskriminators 12 verbunden, so dass die Steuereinrichtung 8 die Länge des Lichtwellenleiters 2, 5 aus dem Vergleich der Ausgangssignale des Generators 11 und des Lichtempfängers 10 im Phasendiskriminator 12 oder die Länge des Lichtwellenleiters 2, 5 aus der Frequenz des Generators 11 ermitteln kann.

Eine Längenänderung des Lichtwellenleiters 2, 5 wird dabei aus Vergleichen der Ausgangssignale des Generators 11 und des Lichtempfängers 10 im Phasendiskriminator 12 oder aus einer Frequenzänderung des Generators 11 zum Erreichen einer zeitlich früheren Phasendifferenz zwischen den Signalen am Ausgang des Generators 11 und des Lichtempfängers 10 durch die Steuereinrichtung 8 ermittelt.

Die Steuereinrichtung 8 des Ausführungsbeispiels kann dazu insbesondere ein bekannter Mikrorechner oder Mikrocontroller sein.

In einer weiteren Ausführungsform der Einrichtung zur Ermittlung der auf tragende Teile wirkenden Schneelast mit wenigstens einem Schneelastsensor befindet sich am tragenden Teil 1 ein Temperatursensor 3, der mit der Messeinrichtung 4 verbunden oder verbindbar ist. Damit ist die Temperaturabhängigkeit des Lichtwellenleiters 2, 5 und der Dach- und Trägerstruktur mittels der Steuereinrichtung kompensierbar.

Der Temperatursensor 3 ist dazu ein Messkörper 3 oder ein integraler Temperatursensor 3 in Form einer Schlaufe eines elektrisch leitenden Materials.

## Patentansprüche

1. Schneelastsensor für tragende Teile, **dadurch gekennzeichnet, dass** an dem tragenden Teil (1) ein Lichtwellenleiter (2, 5) als Schneelastsensor so angeordnet ist, dass die durch die Schneelast hervorgerufene Verformung des Teils (1) und die damit verbundene Längenänderung des Lichtwellenleiters (2, 5) ein Maß für die Schneelast ist.

2. Schneelastsensor nach Patentanspruch 1, **dadurch gekennzeichnet, dass** der Lichtwellenleiter (2) als wenigstens eine Schlaufe oder dass der Lichtwellenleiter (2) in Form eines Mäanders oder dass der Lichtwellenleiter (5) in lang gestreckter Form mit wenigstens einem Reflektor (6) jeweils an dem tragenden Teil (1) angeordnet ist.

3. Schneelastsensor nach Patentanspruch 2, **dadurch gekennzeichnet, dass** der Reflektor ein Endreflektor (6) in Form entweder eines Spiegels (6) oder eines optischen Reflexionsfilters (6) ist.

4. Schneelastsensor nach Patentanspruch 1 und 2, **dadurch gekennzeichnet, dass** der in lang gestreckter Form angeordnete Lichtwellenleiter (5) mindestens einen Zwischenreflektor (7) aufweist.

5. Schneelastsensor nach Patentanspruch 1, **dadurch gekennzeichnet, dass** der Lichtwellenleiter (2, 5) wenigstens bereichsweise mit einer Klebverbindung mit dem tragenden Teil (1) verbunden ist.

6. Einrichtung zur Ermittlung der auf tragende Teile (1) wirkenden Schneelast mit wenigstens einem Schneelastsensor nach Anspruch 1, **dadurch gekennzeichnet, dass** der Lichtwellenleiter (2, 5) zur Ermittlung der Schneelast optisch mit einer Messeinrichtung (4) verbunden oder lösbar verbunden ist, dass die Messeinrichtung (4) einen Lichtsender (9) und einen Lichtempfänger (10) zur Kopplung an den Lichtwellenleiter (2, 5) aufweist, dass der Lichtsender (9) und der Lichtempfänger (10) mit einer Steuereinrichtung (8) verbunden sind, wobei die Steuereinrichtung (8) eine die Laufzeit der Lichtwellen im Lichtwellenleiter (2, 5) bestimmende und mit wenigstens einem gespeicherten und die Laufzeit des nicht verlängerten Lichtwellenleiters (2, 5) vergleichende und daraus die durch die Schneelast hervorgerufene Verformung des tragenden Teils (1) ermittelnde Steuereinrichtung (8) ist.

7. Einrichtung nach Patentanspruch 6, **dadurch gekennzeichnet, dass** die Steuereinrichtung eine aus der Laufzeit der Lichtwellen im Lichtwellenleiter (2, 5) die Länge des Lichtwellenleiters (2, 5) bestimmende Steuereinrichtung ist.

8. Einrichtung zur Ermittlung der auf tragende Teile (1) wirkenden Schneelast mit wenigstens einem Schneelastsensor nach Anspruch 1, **dadurch gekennzeichnet, dass** der Lichtwellenleiter (2, 5) zur Ermittlung der Schneelast optisch mit einer Messeinrichtung (4) verbunden oder lösbar verbunden ist, dass die Messeinrichtung (4) aus einem über einen Generator (11) mit einer Steuereinrichtung (8) verbundenen Lichtsender (9) zur Einkopplung wenigstens eines optischen Signals in den Lichtwellenleiter (2, 5) und einem über einen Phasendiskriminator (12) mit der Steuereinrichtung (8) verbundenen Lichtempfänger (10) für das wenigstens eine Signal am Ausgang des Lichtwellenleiters (2, 5) besteht, dass in der Messeinrichtung (4) weiterhin der Lichtempfänger (10) mit einem ersten Eingang des Phasendiskriminators (12) und der Ausgang des Generators (11) mit einem zweiten Eingang des Phasendiskriminators (12) verbunden ist, so dass die Steuereinrichtung (8) entweder eine die Länge des Lichtwellenleiters (2, 5) aus dem Vergleich der Ausgangssignale des Generators (11) und des Lichtempfängers (10) im Phasendiskriminator (12) oder eine die Länge des Lichtwellenleiters (2, 5) der Frequenz des Generators (11) zuordnende Steuereinrichtung (8) ist.

9. Einrichtung nach Patentanspruch 8, **dadurch gekennzeichnet, dass** die Steuereinrichtung (8) eine die Längenänderung des Lichtwellenleiters (2, 5) aus Vergleichen der Ausgangssignale des Generators (11) und des Lichtempfängers (10) im Phasendiskriminator (12) oder dass die Steuereinrichtung (8) eine die Längenänderung des Lichtwellenleiters (2, 5) aus einer Frequenzänderung des Generators (11) zum Erreichen einer zeitlich früheren Phasendifferenz zwischen den Signalen am Ausgang des Generators (11) und des Lichtempfängers (10) ermittelnde Steuereinrichtung (8) ist.

10. Einrichtung nach Patentanspruch 6 oder 8, **dadurch gekennzeichnet, dass** die Messeinrichtung (4) mit einem an dem Teil (1) angebrachten Temperatursensor (3) verbunden oder verbindbar ist, so dass die Temperaturabhängigkeit des Lichtwellenleiters (2, 5) und dem Teil (1) mittels der Steuereinrichtung kompensierbar ist.

11. Verwendung eines Lichtwellenleiters, **dadurch gekennzeichnet, dass** ein an einem tragenden Teil (1) angeordneter Lichtwellenleiter (2, 5) als Schneelastsensor für den tragenden Teil verwendet wird, wobei die durch die Schneelast hervorgerufene Verformung des Teils (1) und die damit verbundene Längenänderung des Lichtwellenleiters (2, 5) ein Maß für die Schneelast ist.
